# EUROPÄISCHE PATENTSCHRIFT

(11) **EP 3 079 041 B1**
(45) Veröffentlichungstag und Bekanntmachung des Hinweises auf die Patenterteilung: **27.06.2018**
(21) Anmeldenummer: 15001022.1
(22) Anmeldetag: 10.04.2015
(51) Int. Cl.: G06F 3/01, B64D 11/00

(54) **VERFAHREN UND SYSTEM ZUR BEREITSTELLUNG EINER VIRTUAL-REALITY-UMGEBUNG FÜR PASSAGIERE VON LAND- UND LUFTFAHRZEUGEN**
METHOD AND SYSTEM FOR THE PRODUCTION OF A VIRTUAL REALITY ENVIRONMENT FOR PASSENGERS OF LANDCRAFT AND AIRCRAFT
PROCÉDÉ ET SYSTÈME DE PRÉPARATION D'UN ENVIRONNEMENT DE RÉALITÉ VIRTUELLE POUR DES PASSAGERS D'AÉRONEFS ET DE VÉHICULES TERRESTRES

(43) Veröffentlichungstag der Anmeldung: 12.10.2016
(73) Patentinhaber: Airbus Defence and Space GmbH, 85521 Ottobrunn (DE)
(72) Erfinder: Olbert, Michael, 21635 Jork (DE); Oppat, Krystian, 22761 Hamburg (DE); Cappitelli, Mario, 22763 Hamburg (DE)
(74) Vertreter: Kastel, Stefan

(56) Entgegenhaltungen:
- US-A1- 2009 319 902
- US-A1- 2011 081 038
- US-A1- 2013 335 303
- US-A1- 2014 160 001
- US-A1- 2015 092 015

## Beschreibung

Die Erfindung betrifft ein Verfahren und ein System zur Bereitstellung einer Virtual-Reality-Umgebung für Passagiere von Land- und Luftfahrzeugen. Insbesondere soll eine immersive Virtual-Reality-Umgebung bereit gestellt werden.

Immersion beschreibt den Eindruck, dass sich die Wahrnehmung der eigenen Person in der realen Welt vermindert und die Identifikation mit einer Person in der virtuellen Welt vergrößert. Hierbei kann beispielsweise die Art der Gestaltung der virtuellen Welt Einfluss auf die Ausprägung des Immersionseffektes nehmen, dieser wird im Regelfall durch eine fesselnde und anspruchsvoll gestaltete virtuelle Welt stärker ausfallen.

Im Unterschied zur passiven, filmischen Immersion erlaubt die virtuelle Realität eine Interaktion mit der virtuellen Umgebung, und dadurch kann eine wesentlich höhere Intensität der Immersion erreicht werden.
Man spricht von einer immersiven, virtuellen Umgebung ("immersive virtual Environment"), wenn es dem Benutzer ermöglicht wird, direkt mit dieser zu interagieren. Das System "CAVE" (siehe http://de.wikipedia.org/wiki/Cave_Automatic_Virtual_Environment) mit entsprechender Interaktionshardware ist ein Beispiel für ein solches System.

Der Begriff "Virtual-Reality" - im Folgenden auch kurz "VR" - umfasst in dem hier gebrauchten Sinne insbesondere interaktive Computergrafik-Anwendungen mit dem Ziel der Immersion. So bietet z.B. Microsoft unter dem Markennamen "Microsoft Hololens" eine Kombination aus einem "Head-Mounted Display", einer Datenbrille im Folgenden kurz HMD genannt mit entsprechender Grafiksoftware und Gestenerfassungseinrichtungen an, mit der ein Benutzer in eine imaginäre Computerwelt, die Virtual Reality eintauchen kann, an, siehe z.B. http://www.microsoft.com/microsoft-hololens/en-us. Vergleichbare Produkte sind unter den Namen "Oculus Rift" und "Google Cardboard" auf dem Markt, siehe https://www.oculus.com/dk2 oder https://www.google.com/get/cardboard.

Aus der US 2009/0319902 A1 ist ein Luftfahrzeugkommunikationssystem an einem Luftfahrzeug wie insbesondere einem Flugzeug bekannt, das eine Datenbrilleeinheit umfasst, mittels der Informationen aus einer Auswahl von Modulen angezeigt werden können, von denen eines Augmented-Realitiy-Modul zum Anzeigen einer Augmented-Reality-Umgebung, ein anderes ein Virtual-Reality-Modul zum Anzeigen einer Virtual-Reality-Umgebung ein anderes ein Unterhaltungsmodul und ein weiteres ein Bestellmodul ist. Weiter sollen damit Gesten des Nutzers zur Eingabe erfassbar sein.

Derartige Virtual-Reality-Anwendungen stehen kurz vor dem Durchbruch auf dem Consumer-Markt. Dies wird dazu führen, dass auch Passagiere von Luft- und Landfahrzeugen, wie Flugzeugen, Bussen oder Zügen, und insbesondere Flugpassagiere diese neuen Konsumerprodukte an Board der Luft- und Landfahrzeuge nutzen wollen und damit insbesondere in eine immersive Umgebung eintauchen wollen. Dies ist an Board von derartigen Luft- und Landfahrzeugen nicht unproblematisch.

Aufgabe der Erfindung ist Passagieren von Luft- und Landfahrzeugen eine hinsichtlich Sicherheit und Komfort verbesserte Möglichkeit der Nutzung von immersiven Virtual-Reality-Erfahrungen bereitzustellen.

Diese Aufgabe wird durch ein Verfahren und ein System mit den Merkmalen der unabhängigen Ansprüche gelöst.

Vorteilhafte Ausgestaltungen sind Gegenstand der Unteransprüche.

Gemäß einem Aspekt schafft die Erfindung ein Verfahren zur Bereitstellung einer Virtual-Reality-Umgebung für Passagiere von Land- und Luftfahrzeugen, bei dem einem Nutzer mittels einer Displayvorrichtung eine Virtual-Reality-Umgebung dargestellt wird und mittels einer Gestenerfassungseinrichtung eine Interaktion zwischen dem Nutzer und der Virtual-Reality-Umgebung erfolgt, wobei innerhalb der Virtual-Reality-Umgebung dem Nutzer eine virtuelle Bedieneinrichtung dargeboten wird, durch die eine andere Virtual-Reality-Umgebung auswählbar ist, die sich von der dargestellten Virtual-Reality-Umgebung unterscheidet.

Vorzugsweise wird eine immersive Virtual-Reality-Umgebung bereitgestellt.

Es ist bevorzugt, dass die virtuelle Bedieneinrichtung mehrere Bedienelemente umfasst, durch die mehrere verschiedene Virtual-Reality-Umgebungen zur Auswahl bereitgestellt werden.

Es ist bevorzugt, dass innerhalb der dargebotenen Virtual-Reality-Umgebung ein virtuelles Bedienelement vorhanden ist, das dem Nutzer jederzeit eine Rückkehr in den realen Raum ermöglicht.

Es ist bevorzugt, dass im Fall einer realen Mitteilung an die Passagiere oder bei einem Notfall die aktuelle Virtual-Reality-Umgebung automatisch beendet wird und die reale Mitteilung dem Nutzer akustisch und/oder optisch dargeboten wird.

Es ist bevorzugt, dass die aktuelle Virtual-Reality-Umgebung für einen oder mehrere definierte Nutzer oder für alle Nutzer durch das Personal des Land- oder Luftfahrzeugs zu jeder Zeit abschaltbar ist.

Es ist vorgesehen, dass in der Gestenerfassungseinrichtung mindestens ein Grenzwert vorgegeben ist, bei dessen Überschreitung ein Warnsignal ausgegeben wird und/oder eine automatische Beendigung der Virtual-Reality-Umgebung erfolgt.

Es ist vorgesehen, dass der mindest eine Grenzwert eine maximal zulässige Geschwindigkeit oder Beschleunigung der Bewegung des Körpers oder eines Körperteils des Nutzers definiert.

Es ist bevorzugt, dass ein weiterer Grenzwert einen dem Nutzer zur Verfügung stehenden physikalischen Raum definiert.

Es ist bevorzugt, dass ein akustischer Grenzwert vorgegeben ist, bei dessen Überschreitung ein Warnsignal ausgegeben wird und/oder eine automatische Beendigung der Virtual-Reality-Umgebung erfolgt.

Vorzugsweise wird vor einer automatischen Beendigung der Virtual-Reality-Umgebung ein Warnsignal zur Ankündigung einer Beendigung ausgegeben.

Vorzugsweise werden Warnsignale optisch und/oder akustisch und/oder durch mechanische Interaktion (z.B. Vibrieren) ausgegeben.

Es ist bevorzugt, dass die virtuelle Oberfläche der virtuellen Bedieneinrichtung für den Nutzer räumlich mit einer physikalischen Oberfläche eines realen Objekts übereinstimmt, insbesondere mit einer Oberfläche eines vor dem Nutzer befindlichen Sitzes oder einer Wand, oder einer Oberfläche des Sitzes des Nutzers.

Gemäß einem weiteren Aspekt schafft die Erfindung ein System zur Bereitstellung einer Virtual-Reality-Umgebung für Passagiere von Land- oder Luftfahrzeugen, umfassend, eine Displayvorrichtung zur Darstellung einer Virtual-Reality-Umgebung; eine Gestenerfassungseinrichtung zur Erfassung von Körperbewegungen und eine Interaktionsmetapher-Einheit, die aus den Signalen der Gestenerfassungseinrichtung eine Interaktion des Nutzers mit der Virtual-Reality-Umgebung ermöglicht; wobei innerhalb der Virtual-Reality-Umgebung dem Nutzer eine Bedieneinrichtung darstellbar ist, durch die eine andere Virtual-Reality-Umgebung auswählbar ist, die sich von der dargestellten Virtual-Reality-Umgebung unterscheidet.

Es ist bevorzugt, dass die virtuelle Bedieneinrichtung mehrere Bedienelemente umfasst, durch die mehrere verschiedene Virtual-Reality-Umgebungen zur Auswahl bereitgestellt werden.

Es ist bevorzugt, dass innerhalb der dargebotenen Virtual-Reality-Umgebung ein virtuelles Bedienelement vorhanden ist, das dem Nutzer jederzeit eine Rückkehr in den realen Raum ermöglicht.

Vorzugsweise ist eine Abschalteinreichtung vorgesehen, die ein oder mehrere der folgenden Ereignisse bewirkt:
- automatisches Abschalten der Virtual-Reality-Umgebung im Fall einer realen Mitteilung an einen oder mehrere Passagiere,
- automatisches Abschalten der Virtual-Reality-Umgebung bei einem Notfall,
- manuelles Abschalten der Virtual-Reality-Umgebung eines oder mehrerer Nutzer durch das Personal des Land- oder Luftfahrzeugs.

Es ist vorgesehen, dass in der Gestenerfassungseinrichtung mindestens ein Grenzwert vorgegeben ist, bei dessen Überschreitung ein Warnsignal ausgegeben wird und/oder eine automatische Beendigung der Virtual-Reality-Umgebung erfolgt.

Es ist weiter vorgesehen, dass der mindestens eine Grenzwert einen oder mehrere der folgenden Parameter definiert:
- eine maximal zulässige Geschwindigkeit der Bewegung des Körpers oder eines Körperteils des Nutzers;
- eine maximal zulässige Beschleunigung der Bewegung des Körpers oder eines Körperteils des Nutzers.

Es ist bevorzugt, dass ein weiterer Grenzwert des mindestens einen Grenzwerts einen dem Nutzer zur Verfügung stehenden physikalischen Raum definiert.

Es ist bevorzugt, dass ein akustischer Grenzwert vorgegeben ist, bei dessen Überschreitung ein Warnsignal an den Nutzer ausgegeben wird und/oder eine automatische Beendigung der Virtual-Reality-Umgebung erfolgt.

Vorzugsweise ist das System dazu ausgebildet, vor einer automatischen Beendigung der Virtual-Reality-Umgebung ein Warnsignal zur Ankündigung der Beendigung ausgegeben.

Vorzugsweise weist das System eine Warnsignalausgabeeinrichtung zur optischen und/oder akustischen und/oder durch mechanische Interaktion (z.B. Vibrieren) erfolgenden Ausgabe eines Warnsignals auf.

Es ist bevorzugt, dass die virtuelle Oberfläche der virtuellen Bedieneinrichtung derart angeordnet ist, dass sie für den Nutzer räumlich mit einer physikalischen Oberfläche eines realen Objekts übereinstimmt, insbesondere mit einer Oberfläche eines vor dem Nutzer befindlichen Sitzes oder einer Wand, oder einer Oberfläche des Sitzes des Nutzers.

Gemäß einem weiteren Aspekt betrifft die Erfindung eine Verwendung eines Systems zur Bereitstellung einer Virtual-Reality-Umgebung in einem Land- oder Luftfahrzeug zur Durchführung des Verfahrens nach einem der oben erläuterten Ausgestaltungen.

Gemäß einem weiteren Aspekt betrifft die Erfindung Programmspeicher mit einem Computerprogramm zur Steuerung eines Systems zur Bereitstellung einer Virtual-Reality-Umgebung in einem Land- oder Luftfahrzeug, das Programmschritte zur Durchführung des Verfahrens nach einem der oben erläuterten Ausgestaltungen umfasst.

Bevorzugte Ausgestaltungen der Erfindung ermöglichen eine besonders sichere und komfortable Nutzung von immersiven Virtual-Reality-Geräten durch Passagiere von Fahrzeugen, wie insbesondere Land- und Luftfahrzeugen. Zu den immersiven Geräten zählen insbesondere Helme oder Brillen, die eine VR-Umgebung darstellen können, und Trackingsensoren, die Ortsposition und Lage von Teilen der Bedienperson, wie z.B. Kopf, Hände, Finger erfassen und verfolgen. So können z.B. Finger einer Person in der VR-Umgebung virtuell dargestellt werden.

Besonders bevorzugte Ausgestaltungen des Verfahren und des Systems gemäß der Erfindung sollen immersive Sitzungen, in denen Passagiere an Board eines Flugzeuges, eines Zuges oder Busses oder dergleichen Fahrzeug, in eine Virtual-Reality-Umgebung eintauchen, auch unter den oft engen Platzverhältnisses ermöglichen.

Besonders bevorzugt wird durch eine Integration von Displaytechnologie, Trackingtechnologie und kontextbezogenen Interaktionsmetaphern und/oder kontextbezogenen Bedieneinrichtungen eine an die Anforderungen von Passagierkabinen angepasste VR-Umgebung erzeugt. Dies erfolgt insbesondere derart, dass immersive Geräte in einer Passagierkabine anwendbar sind und dabei der Komfort aller Passagiere, einschließlich der Nachbarn des Nutzers, und die Sicherheit der Flugdurchführung bzw. der Fahrtdurchführung gewährleistet sind.

Die Displaytechnologie wird vorzugsweise ausgewählt aus einer Gruppe, die einen VR-Helm, eine VR-Brille, eine Netzhautprojektion und ein Sichtfelddisplay umfasst.

Vorzugsweise wird wenigstens eine virtuelle Bedieneinrichtung eingesetzt. Diese umfasst insbesondere Objekte zur Interaktion in der virtuellen Szene. Z.B. können in der virtuellen Szene Schaltflächen-Felder angezeigt werden, die durch Berühren mit der virtuellen Szene einen Bedienvorgang initiieren.

Interaktionsmetaphern umfassen insbesondere die möglichen reellen Handlungen in der Passagierkabine, die in der virtuellen Umgebung vermerkt werden.

Mit besonders bevorzugten Ausgestaltungen der Erfindung lassen sich gegenüber bisherigen VR-Techniken insbesondere folgende Probleme in Bezug auf immersive Sitzungen in Passagierkabinen von Land- und Luftfahrzeugen vermeiden:
- Es sind bisher reelle Vorrichtungen nötig, um die immersive Sitzung zu starten oder zu wechseln oder zu ändern.
- Es soll eine immersive Auswahlumgebung für die Umgebung Kabine geschaffen werden; bisher wäre z.B. zum Wechseln eines Films in der VR eine Rückkehr in den realen Raum nötig.
- Die Sicherheit in der Kabine, insbesondere in einem Flugzeug, soll gewährleistet werden.

Besonders bevorzugte Ausgestaltung des Verfahrens und der Vorrichtung gemäß der Erfindung haben insbesondere einen oder mehrere der folgenden Vorteile und/oder Merkmale:
- Schaffen einer (immersiven) virtuellen Umgebung, in der eine virtuelle Umgebung auswählbar ist.
- Schaffen einer (immersiven) virtuellen Umgebung, die die Anforderungen an eine Passagierkabine und insbesondere Flugzeugkabine erfüllt.
- Nachbildung reeller Interaktionsmetaphern in der virtuellen Umgebung, wobei der Nutzer innerhalb seines verfügbaren physikalischen Raums bleibt.
- der Nutzer kann ohne reelle Bedienelemente in beliebige virtuelle Welten eintauchen.

Vorzugsweise wird eine virtuelle Bedienumgebung für ein (immersives) In-Flight Entertainment-System (IFE-System) geschaffen. Dies wird z.B. durch eine Integration von Displaytechnologien mit Trackingtechnologien, insbesondere zur Gestenerkennung, und mit speziellen Interaktionsmetaphern erreicht, die an die Anforderungen in der Kabine angepasst sind.

Vorteilhaft werden keine physikalischen Bedienelemente für ein IFE-System benötigt. Die vorgeschlagenen virtuellen Bedieneinrichtungen, z.B. Bedienfelder, können uneingeschränkt variieren, z.B. auf die persönlichen Anforderungen und Vorlieben der Passagiere hin angepasst werden. Es kann auch die Möglichkeit gegeben werden, dass der Passagier die Bedieneinrichtungen selbst konfigurieren kann. Gründe für eine Anpassung durch die Passagiere können z.B. sein: Berücksichtigung des Alters, Sehschwächen, andere Einschränkungen oder Vorlieben.

Die Interaktion mit der VR-Umgebung erfolgt insbesondere mit Interaktionsmetaphern, die für die Kabine während des Flugs/der Fahrt geeignet sind. Insbesondere sind räumliche Einschränkungen und Einschränkungen hinsichtlich des Komforts der anderen Passagiere und Einschränkungen hinsichtlich der Flugsicherheit vorgesehen.

Ein Beispiel für eine Anwendung kann ein VR-Headset, vergleichbar zu dem eingangs erwähnten Stand der Technik sein, auf dem Filme gezeigt werden können. Der Passagier taucht dann in die VR-Umgebung ein, in der ein Film wiedergegeben wird. Über Tracking-Technologien kann der Passagier mit dem Inhalt seiner VR-Umgebung via Gestensteuerung interagieren. Dabei werden bisher für In-Flight-Entertainment-Systeme benötigte reelle Bedienelemente durch virtuelle Bedieneinrichtungen ersetzt.

Es können damit neue Kabinenkonzepte umgesetzt werden, z.B. ist gar kein Monitor vor dem Passagier mehr notwendig, sondern es werden entsprechende HMDs ausgegeben.

In einem Anwendungsbeispiel setzt ein Passagier seine Displayeinheit auf und taucht so in eine erste VR-Umgebung ein. Diese erste VR-Umgebung ist als Bedienumgebung mit virtuellen Bedieneinrichtungen ausgebildet, die der Passagier entsprechend durch reelle Handlungen, die in der virtuellen Umgebung vermerkt werden, bedienen kann. So kann er eine gewünschte zweite VR-Umgebung starten oder wechseln oder bedienen. Z.B. kann er einen Film auswählen und starten, oder ein VR-Spiel auswählen und starten.

Eine, mehrere oder alle der VR-Umgebungen können vollimmersive Umgebungen sein, d.h. der Passagier taucht vollständig in die Umgebung ein und ist von der reellen Umgebung weitgehend entkoppelt. Einige, mehrere oder alle der VR-Umgebungen können auch teilimmersive Umgebungen sein, d.h. virtuelle Bilder oder Objekte werden in Eindrücke aus der reellen Umgebung oder einer anderen VR-Umgebung eingespielt - man spricht dann auch von "Mixed Reality" oder "Augmented Reality".

Vorzugsweise wird der Nutzer zumindest teilweise getrackt, d.h. Bewegungen von Gliedmaßen, Körperteilen und/oder des Kopfes werden erfasst. Insbesonere bei Ausführungen mit vollimmersiver VR-Umgebung werden die Bewegungen vorzugsweise auf einen entsprechenden virtuell dargestellten Körper übertragen. Man sieht dann eine Avatar mit virtuellen Händen und z.B. einem virtuellen Knopf zum Bedienen.

Eine derartige virtuelle Körperdarstellung mittels Avataren kann insbesondere bei einer Ausführung mit Darstellung in Augmented Reality bzw. Mixed Reality auch entfallen.

Die Tracking-Technologien sind sehr variabel. Diese können z.B. optische Kameras mit Bilderkennung umfassen.

Die virtuellen Bedieneinrichtungen werden vorzugsweise als Bedienelemente ausgebildet, die als Holografien in der virtuellen Welt dargestellt werden.

Sehr verschiedene Szenen sind als virtuelle Umgebungen denkbar. Möglich sind insbesondere virtuelle Außenansichten, auch mit eingespielten Informationen über die Umgebung, wo sich das Fahrzeug derzeit befindet. Es sind Wettersimulationen denkbar. Es können beruhigende Umgebungen erzeugt werden, z.B. Landschaften, Wälder, Natur oder dergleichen. Dies ist insbesondere bei Passagieren mit Flugangst hilfreich. Durch derartige Techniken können auch neue Kabinenkonzepte, z.B. Großkabinen ohne Fenster, eine höhere Akzeptanz bei Passagieren erreichen. Weitere mögliche Szenarien sind die Darstellung eines Kinoraumes, in der als weitere Umgebung ein Film virtuell dargestellt wird. Ein Wechsel zwsichen unterschiedlichen VR-Szenen ist ohne reelle Bedienelemente möglich. Es können komplett immersive Sitzungen durchgeführt werden.

Im Folgenden wird die Erfindung anhand der beigefügten Zeichnungen näher erläutert. Dabei zeigen:
- Fig. 1: eine schematische Darstellung einer reellen Umgebung eines Passagiers eines Luft- oder Landfahrzeuges mit einer ersten Ausführungsform eines Systems zur Bereitstellung einer Virtual-Reality-Umgebung, wobei ein Teil der durch den Passagier sichtbare Virtual-Reality-Umgebung gestrichelt dargestellt ist,
- Fig. 2: eine Darstellung vergleichbar der Fig. 1 für eine zweite Ausführungsform des Systems;
- Fig. 3: eine schematische Darstellung eines Beispiels einer durch das System nach Fig. 1 oder 2 bereitstellbaren Szene einer immersiven Virtual-Reality-Umgebung;
- Fig. 4: eine schematische Darstellung eines weiteren Beispiels einer durch das System nach Fig. 1 oder 2 bereitstellbaren Szene einer immersiven Virtual-Reality-Umgebung;
- Fig. 5: eine Darstellung einer Passagierkabine mit einem Passagier, der ein System zur Bereitstellung einer Virtual-Reality-Umgebung nutzt, wobei ein weiteres Beispiel einer bereitstellbaren Virtual-Reality-Umgebung gestrichtelt dargestellt ist; und
- Fig. 6: eine Darstellung vergleichbar der Fig. 5 mit einem weiteren Beispiel einer bereitstellbaren Virtual-Reality-Umgebung.

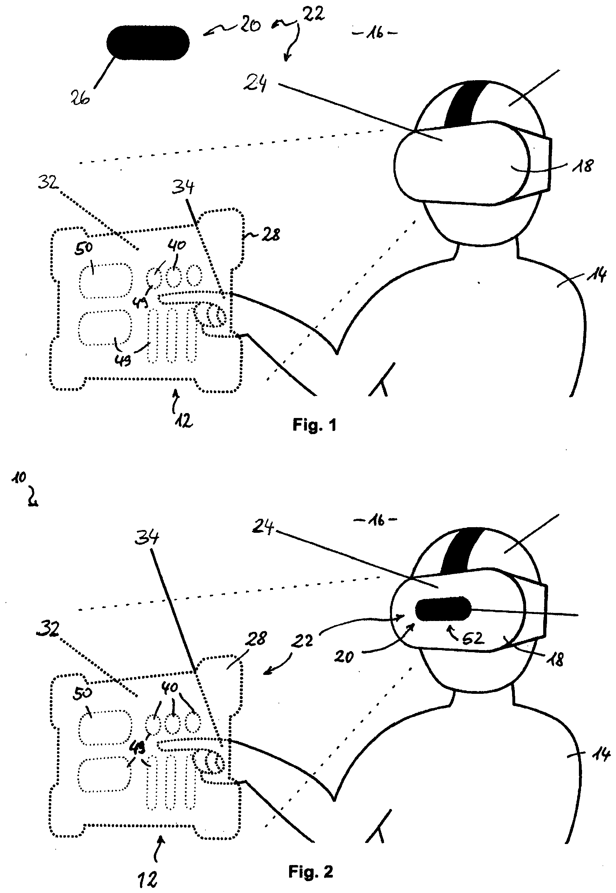

In den Fig. 1, 2, 5 und 6 sind unterschiedliche Ausführungsbeispiele für ein System 10 zur Bereitstellung einer Virtual-Reality-Umgebung 12 für Passagiere 14 von Land- oder Luftfahrzeugen dargestellt. Das System 10 ist beispielsweise für die Nutzung in einer Passagierkabine 16 eines Flugzeuges ausgelegt.

Das System 10 umfasst eine Displayvorrichtung 18 zur Darstellung einer Virtual-Reality-Umgebung 12, eine Gestenerfassungseinrichtung 20 zur Erfassung von Körperbewegungen und eine Interaktionsmetapher-Einheit 22, die aus den Signalen der Gestenerfassungseinrichtung 20 eine Interaktion des Nutzers mit der Virtual-Reality-Umgebung 12 ermöglicht.

Das System 10 weist z.B. eine zentrale Recheneinheit (nicht dargestellt) auf, in der die Interaktionsmetapher-Einheit 22 sowie Einheiten zur Bereitstellen von Computergrafiken auf der Displayvorrchtung 18 anhand vorgegebener Inhalte, wie Filme, Szenarien, Daten über die Umgebung des Fahrzeugs, Wetterdaten, Spielesoftware usw. mittels Software realisiert sind.

Als Displayvorrichtungen 18 kommen alle zum Darstellen der Virtual-Reality-Umgebung 12 geeigneten Anzeigegeräte in Betracht. Dies sind z.B. Helme oder Brillen oder sogenannte Head-Mounted-Displays 24 (kurz HMD 24), die als Beispiel in den Figuren dargestellt sind. Weitere Beispiele sind Netzhautprojektoren, oder Sichtfelddisplays. Die Displayvorrichtung 18 kann für eine Abschirmung der reellen Welt ausgebildet sein, um eine vollständige Immersion zu bewirken, oder sie kann die Virtual-Reality-Umgebung der reellen Welt überlagern, um eine Teilimmersion oder Mixed Reality (auch Augmented Reality genannt) bereitzustellen, wo virtuelle Inhalte in realen Szenen dargeboten werden. Eine Abschirmung kann auch schaltbar sein (z.B. durch Herunterklappen von Blenden), so dass die Displayvorrichtungen 18 zwischen einem vollimmersiven Betrieb und einem teilimmersiven Betrieb umschaltbar ist. Unter Displayvorrichtung 18 ist somit eine Vorrichtung zum Transport eines künstlich geschaffenen Bildes in das Auge eines Anwenders zu verstehen. Beispiele sind VR-Brillen, VR-Helme, Netzhautprojektion, Lichtfelddisplays usw.

Als HMDs 24 ausgebildete Displayvorrichtungen 18 sind bereits auf dem Markt erhältlich.

Die Gestenerfassungseinrichtung 20 kann insbesondere ein z.B. optisches Trackingsystem aufweisen, mit dem Körperteile des Passagiers 14 örtlich und in ihrer Lage erfassbar sind. Die Gestenerfassungseinrichtung 20 ist z.B. zur Durchführung eines Trackingverfahrens ausgebildet. Die Gestenerfassungseinrichtung 20 ist eine Vorrichtung, die der Erfassung und Verarbeitung von Gestaltdaten, Haltungsdaten und Bewegungsdaten von Körpern dient, einschließlich menschlicher Körper und auch eines Auges des menschlichen Körpers. Auch ein sogenannter Eyetracker, der die Bewegung eines Auges erfasst und z.B. in Steuersignale umwandeln kann, ist ein Beispiel für eine Gestenerfassungseinrichtung 20.

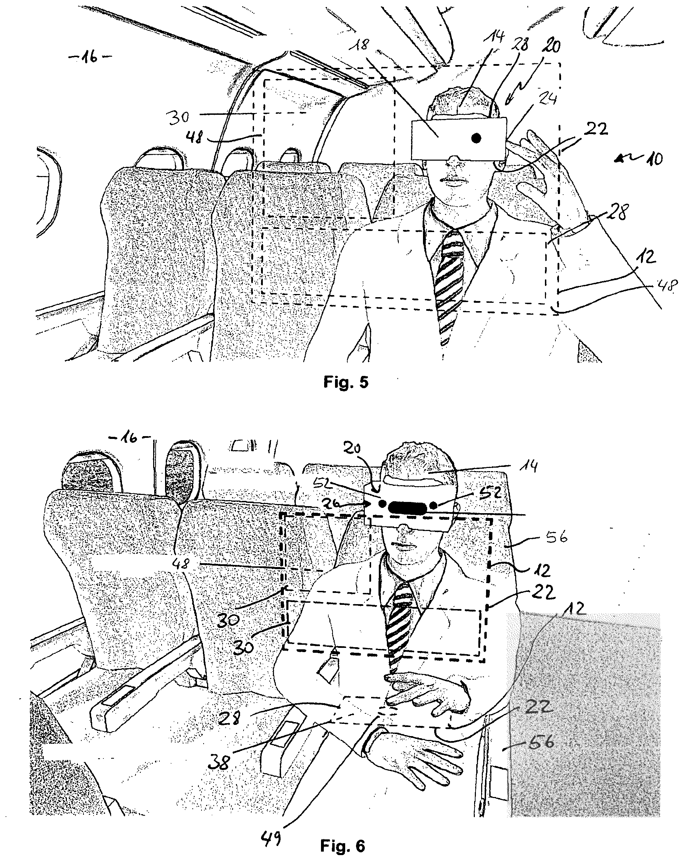

In Fig. 1 ist ein System 10 mit einer ortsfest z.B. an der Kabine oberhalb des Passagiers angeordneten Trackingeinrichtung 26 dargestellt. Die in Fig. 2 und in Fig. 6 dargestellte Ausführungsbeispiele des Systems 10 zeigen eine am HMD 24 angebrachte Trackingeinrichtung 26. Zum Beispiel sind am HMD 24 wenigstens zwei Kameras 52 angebracht, die die Lage, Haltung und Ausrichtung der Hände 34 des Passagiers 14 erfassen und nachverfolgen und so zum Erfassen von Gesten eingesetzt werden.

Die Gestenerfassungseinrichtung 20 erfasst z.B. mittels der Trackingeinrichtung 26 Gesten des Passagiers 14. Die Recheneinheit ist so ausgebildet, dass bestimmte Gesten - Interaktionsmetaphern - als bestimmte Steuerbefehle zur Interaktion mit den Inhalten der Virtual-Reality-Umgebung erkannt werden und eine entsprechende Interaktion durchgeführt wird.

Im Folgenden wird erläutert, wie ein solches System 10 und ein damit durchführbares Verfahren zur Bereitstellung einer immersiven Virtual-Reality-Umgebung 12 ausgestaltet sein können, damit Passagiere 14 in Passagierkabinen von Land- und Luftfahrzeugen derartige immersive Konsumer-Geräte (Helme, Brillen, Trackingsensoren usw.) während des Fluges oder der Fahrt verwenden können, und derartige Anwendungen von der Seite des Luft- bzw. Landfahrzeuges aus unterstützt werden können.

Um Risiken für den eigenen Komfort des Anwenders und anderer Passagiere sowie Gefahren für die Flugsicherheit - insbesondere aufgrund fehlender Aufmerksamkeit der immersierten Passagiere, zu entgehen, ist das System 10 in der im Folgenden näher erläuterten Weise ausgebildet.

Ausführungsbeispiele des Systems 10 zeichnen sich durch eine Integration von Displaytechnologie, Trackingtechnologie, kontextbezogenen Interaktionsmetaphern (insbesondere im Bezug auf den Kontext Passagierkabine 16) sowie eine kontextbezogene 3D-Umgebung mit virtuellen Bedieneinrichtungen 28 aus.

Insbesondere bietet das System 10 durch die Virtual-Reality-Umgebung 12 dem Nutzer eine virtuelle Bedieneinrichtung 28 dar, durch die eine andere Virtual-Reality-Umgebung 30 auswählbar ist, die sich von der dargestellten Virtual-Reality-Umgebung 12 unterscheidet.

Unter kontextbezogenen Interaktionsmetaphern werden im Speziellen die in einer Passagierkabine 16, z.B. Flugzeugkabine, möglichen realen Handlungen beschrieben, die über Trackingtechnologien und insbesondere die Gestenerfassungseinrichtung 20 für Handlungen in einer virtuellen Umgebung verwendet werden können.

Virtuelle Bedieneinrichtungen 28 können alle nicht-physikalisch vorhandenen Objekte zur Interaktion in einer virtuellen Szene sein.

Bei bisherigen In-Flight-Entertainment-Systemen (IFE-System) sind immer reale Bedienvorrichtungen notwendig, um eine Entertainment-Sitzung zu starten. Z.B. kann das Wechseln von einem Film zu einem nächsten nicht ohne die kognitive Rückkehr in den realen Raum (Passagierkabine) erfolgen. Dagegen ist es mit dem hier vorliegenden System 10 möglich, immersive IFE-Inhalte in einer immersiven Auswahlumgebung, nämlich der Virtual-Reality-Umgebung 12, auszuwählen, mit dieser zu interagieren oder die VR-Umgebung zu wechseln oder zu beenden. Eine kognitive Rückkehr in den realen Raum ist nicht notwendig. Dies macht z.B. für Passagiere 14 mit Flugangst einen großen Unterschied.

Die Virtual-Reality-Umgebung 12, in der eine virtuelle Bedieneinrichtung 28 bereitgestellt wird, wird auf die spezielle Umgebung Passagierkabine 16 hin erstellt. Die Bedieneinrichtung 28 ist so ausgebildet, dass sie innerhalb des begrenzten Raumes des Passagiers 14 ohne Beeinträchtigung des Komforts anderer Passagiere bedienbar ist.

Zum Beispiel werden alle Schaltflächen oder sonstigen Bedienelemente 49, 50 der virtuellen Bedieneinrichtung 28 in der Virtual-Reality-Umgebung 12 innerhalb des Raumes dargestellt, der auch in der realen Welt - der Passagierkabine 16 - dem Passagier 14 zur Verfügung steht.

Insgesamt ist es sinnvoll, die Steuerung von immersiven VR-Inhalten während des Fluges auf eine angemessene Art und Weise zuzulassen und die Bedienbarkeit sowie die Sicherheit nicht zu beeinträchtigen
So können z.B. durch die Gestenerfassungseinrichtung Grenzwerte für die Orte, Geschwindigkeit und Beschleunigung der Gesten und/oder akustische Grenzwerte gesetzt werden, bei deren Überschreitung Maßnahmen getroffen werden, die den immersierte Passagier 14 veranlassen, innerhalb der gesetzten Grenzen zu bleiben.

Mit dem System 10 und dem damit durchführbaren Verfahren kann eine Virtual-Reality-Umgebung 12 geschaffen werden, welche es auf immersive Art und Weise gestattet, eine andere virtuelle Umgebung 30 auszuwählen, und die den Anforderungen einer Passagierkabine 16 genügt. Hierfür ist die Nachbildung realer Interaktionsmetaphern (z.B. Drücken eines Knopfes) in einer virtuellen Umgebung vorgesehen, die den Anwender veranlasst, innerhalb seines verfügbaren physikalisch vorhandenen Raums zu bleiben, wobei der Anwender ohne reale Bedienelemente in beliebige virtuelle Räume eintauchen kann.

Das System 10 stellt, wie in den Fig. 1, 2, 5 und 6 dargestellt, ein als virtuelle Bedieneinrichtung 28 z.B. ein virtuelles Menue 32 dar, das in dem Raum dargestellt wird, der dem Passagier zur Verfügung steht, so dass das Passagier 14 bei Interaktion mit dem Menue 32 mit seiner virtuellen und realen Hand 34 seinen Raum nicht verlässt.

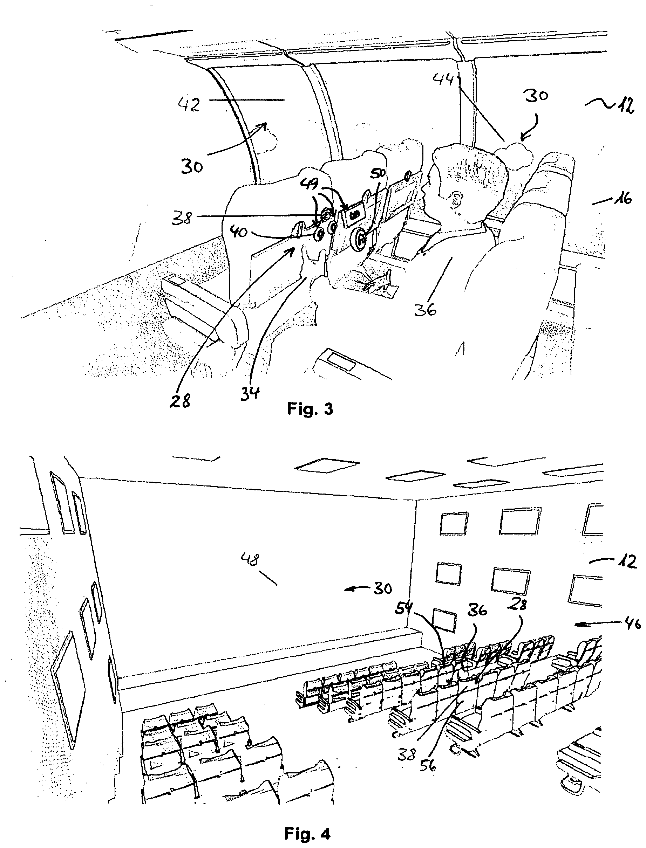

Die Fig. 3 und 4 zeigen Beispiel für die Virtual-Reality-Umgebung 12, in der die andere Virtual-Reality-Umgebung 30 auswählbar ist.

In Fig. 3 ist als Virtual-Reality-Umgebung 12 z.B. eine Computergrafik der Passagierkabine 16 dargestellt, wobei der Passagier 14 als Avatar 36 dargestellt ist. Die virtuelle Bedienvorrichtung 28 ist als Interaktionsmenue 38 angezeigt, wobei z.B. Knöpfe 40 virtuell dargestellt sind und durch reale Bewegung der virtuellen und realen Hand 34 zu dem Knopf 40 betätigbar sind. Eine entsprechende Bewegung der realen Hand wird durch die Gestenerfassungseinrichtung 20 erfasst und als Wunsch einer Betätigung des entsprechenden virtuellen Knopfes 40 interpretiert.

Damit kann der Passagier z.B. eine virtuelle Außenansicht 42 oder eine Wettersimulation 44 auswählen oder beeinflussen.

Fig. 4 zeigt ein anderes Beispiel für die Virtual-Reality-Umgebung 12, wobei dem Passagier 14 eine Computergrafik eines Kinoraumes 46, sein Avatar 36 und das Interaktionsmenue 38 dargestellt wird. Mit dem Interaktionsmenue 38 kann der Passagier 14 einen Film zur Ansicht auf einer virtuellen Leinwand 48 auswählen oder starten.

Fig. 5 und 6 zeigen Beispiele von teilimmersiven Virtual-Reality-Umgebungen, wo dem Passagier 14 das Interaktionsmenue 38 und eine darzustellende andere Virtual-Reality-Umgebung 30 als Mixed-Reality überlagert zu Wahrnehmungen aus der realen Welt dargestellt werden.

Die virtuelle Bedieneinrichtung 28 der dargestellten Ausführungsbeispiele des Systems 10 umfasst mehrere virtuelle Bedienelemente 49, durch die mehrere verschiedene Virtual-Reality-Umgebungen 30 zur Auswahl bereitgestellt werden.

Innerhalb der dargebotenen Virtual-Reality-Umgebung 12 ist weiter ein virtuelles Bedienelement 50 vorhanden, das dem Nutzer jederzeit eine Rückkehr in den realen Raum ermöglicht.

Das System 10 ist so ausgebildet, dass im Fall einer realen Mitteilung an die Passagiere 14 oder bei einem Notfall z.B. durch das Personal die aktuelle Virtual-Reality-Umgebung 12, 30 automatisch beendet werden kann und die reale Mitteilung dem Nutzer akustisch und/oder optisch dargeboten werden kann. Somit können Durchsagen an die immersierten Passagiere gerichtet werden.

Weiter ist das System 10 so ausgebildet, dass die aktuelle Virtual-Reality-Umgebung 12, 30 für einen oder mehrere definierte Nutzer oder für alle Nutzer durch das Personal des Land- oder Luftfahrzeugs zu jeder Zeit abschaltbar ist.

Insbesondere ist hierzu eine zum Beispiel als Software in der Recheneinheit realisierte Abschalteinreichtung vorgesehen, die ein oder mehrere der folgenden Ereignisse bewirkt:
- automatisches Abschalten der Virtual-Reality-Umgebung 12 im Fall einer realen Mitteilung an einen oder mehrere Passagiere 14,
- automatisches Abschalten der Virtual-Reality-Umgebung 12, 30 bei einem Notfall,
- manuelles Abschalten der Virtual-Reality-Umgebung 12, 30 eines oder mehrerer Nutzer durch das Personal des Land- oder Luftfahrzeugs.

Um den Komfort und die Sicherheit der immersierten Passagiere 14 und deren Nachbarn zu sichern ist vorgesehen, dass in der Gestenerfassungseinrichtung 20 mindestens ein Grenzwert vorgegeben ist, bei dessen Überschreitung ein Warnsignal ausgegeben wird.

Alternativ oder zusätzlich kann eine automatische Beendigung der Virtual-Reality-Umgebung 12, 30 erfolgen. Eventuell kann vorher ein zweites Warnsignal zur Ankündigung der Beendigung abgegeben werden.

Der Grenzwert definiert z.B. einen dem Nutzer zur Verfügung stehenden physikalischen Raum. Verlässt der Passagier diesen Raum, kann ein entsprechendes Warnsignal abgegeben werden und/oder die Umgebung beendet werden. Damit kann der Komfort der Nachbarpassagiere auch bei tief immersierten Nutzern verbessert werden.

Der Grenzwert kann aber auch eine maximal zulässige Geschwindigkeit oder Beschleunigung der Bewegung des Körpers oder eines Körperteils des Nutzers definieren. So können zu wilde Gesten, die den Komfort von Mitpassagieren und den eigenen Komfort schmälern könnten, vermieden werden.

Es kann auch ein akustischer Grenzwert vorgegeben werden, bei dessen Überschreitung ein Warnsignal ausgegeben wird und/oder eine automatische Beendigung der Virtual-Reality-Umgebung erfolgt.

Bei weiteren Ausführungsbeispielen des System 10 ist weiter vorgesehen, dass die virtuelle Oberfläche der virtuellen Bedieneinrichtung für den Nutzer räumlich mit einer physikalischen Oberfläche eines realen Objekts übereinstimmt, insbesondere mit einer Oberfläche eines vor dem Nutzer befindlichen Sitzes 54 oder einer Wand, oder einer Oberfläche des Sitzes 56 des Nutzers. Somit kann der Nutzer eine haptische Rückkopplung für seine Interaktionsmetapher erhalten.

### Bezugszeichenliste:

- 10: System
- 12: (immersive) Virtual-Reality-Umgebung
- 14: Passagier
- 16: Passagierkabine
- 18: Displayvorrichtung
- 20: Gestenerfassungseinrichtung
- 22: Interaktionsmetapher-Einheit
- 24: HMD
- 26: Trackingeinrichtung
- 28: Bedieneinrichtung
- 30: andere Virtual-Reality-Umgebung
- 32: virtuelles Menue
- 34: virtuelle und reale Hand
- 36: Avatar
- 38: Interaktionsmenue
- 40: Knopf
- 42: virtuelle Außenansicht (Beispiel für andere VR-Umgebung)
- 44: Wettersimulation (Beispiel für andere VR-Umgebung
- 46: Kinoraum
- 48: virtuelle Leinwand (Beispiel für andere VR-Umgebung)
- 49: virtuelles Bedienelement zur Auswahl
- 50: virtuelles Bedienelement zur Rückkehr in reale Welt
- 52: Kamera
- 54: Sitz vor dem Passagier
- 56: Sitz des Passagiers

## Patentansprüche

1. Verfahren zur Bereitstellung einer Virtual-Reality-Umgebung (12, 30) für Passagiere (14) von Land- und Luftfahrzeugen, bei dem
einem Nutzer mittels einer Displayvorrichtung (18) eine Virtual-Reality-Umgebung (12, 30) dargestellt wird und mittels einer Gestenerfassungseinrichtung (20) eine Interaktion zwischen dem Nutzer und der Virtual-Reality-Umgebung (12, 30) erfolgt,
**dadurch gekennzeichnet,**
**dass** innerhalb der Virtual-Reality-Umgebung (12) dem Nutzer eine virtuelle Bedieneinrichtung (28) dargeboten wird, durch die eine andere Virtual-Reality-Umgebung (30) auswählbar ist, die sich von der dargestellten Virtual-Reality-Umgebung (12) unterscheidet,
**dass** in der Gestenerfassungseinrichtung (20) mindestens ein Grenzwert vorgegeben ist, bei dessen Überschreitung ein Warnsignal ausgegeben wird und/oder eine automatische Beendigung der Virtual-Reality-Umgebung (12, 30) erfolgt und
**dass** der mindestens eine Grenzwert eine maximal zulässige Geschwindigkeit oder Beschleunigung der Bewegung des Körpers oder eines Körperteils des Nutzers definiert.

2. Verfahren nach Anspruch 1, **dadurch gekennzeichnet, dass** die virtuelle Bedieneinrichtung (28) mehrere Bedienelemente (49) umfasst, durch die mehrere verschiedene Virtual-Reality-Umgebungen (30) zur Auswahl bereitgestellt werden.

3. Verfahren nach Anspruch 1 oder 2, **dadurch gekennzeichnet, dass** innerhalb der dargebotenen Virtual-Reality-Umgebung (12, 30) ein virtuelles Bedienelement vorhanden ist, das dem Nutzer jederzeit eine Rückkehr in den realen Raum ermöglicht.

4. Verfahren nach einem der vorhergehenden Ansprüche, **dadurch gekennzeichnet, dass** im Fall einer realen Mitteilung an die Passagiere (14) oder bei einem Notfall die aktuelle Virtual-Reality-Umgebung (12, 30) automatisch beendet wird und die reale Mitteilung dem Nutzer akustisch und/oder optisch dargeboten wird.

5. Verfahren nach einem der vorhergehenden Ansprüche, **dadurch gekennzeichnet, dass** die aktuelle Virtual-Reality-Umgebung (12, 30) für einen oder mehrere definierte Nutzer oder für alle Nutzer durch das Personal des Land- oder Luftfahrzeugs zu jeder Zeit abschaltbar ist.

6. Verfahren nach einem der vorhergehenden Ansprüche, **dadurch gekennzeichnet, dass** ein weiterer Grenzwert des mindestens einen Grenzwerts einen dem Nutzer zur Verfügung stehenden physikalischen Raum definiert.

7. Verfahren nach einem der vorhergehenden Ansprüche, **dadurch gekennzeichnet, dass** ein akustischer Grenzwert vorgegeben ist, bei dessen Überschreitung ein Warnsignal ausgegeben wird und/oder eine automatische Beendigung der Virtual-Reality-Umgebung erfolgt.

8. Verfahren nach einem der vorhergehenden Ansprüche, **dadurch gekennzeichnet, dass** eine virtuelle Oberfläche der virtuellen Bedieneinrichtung (28) für den Nutzer räumlich mit einer physikalischen Oberfläche eines realen Objekts übereinstimmt, insbesondere mit einer Oberfläche eines vor dem Nutzer befindlichen Sitzes (54) oder einer Wand, oder einer Oberfläche des Sitzes (56) des Nutzers.

9. System (10) zur Bereitstellung einer Virtual-Reality-Umgebung (12, 30) für Passagiere (14) von Land- oder Luftfahrzeugen, umfassend,
eine Displayvorrichtung (18) zur Darstellung einer Virtual-Reality-Umgebung (12, 30);
eine Gestenerfassungseinrichtung (20) zur Erfassung von Körperbewegungen;
und eine Interaktionsmetapher-Einheit (22), die aus den Signalen der Gestenerfassungseinrichtung (20) eine Interaktion des Nutzers mit der Virtual-Reality-Umgebung (12, 30) ermöglicht; **dadurch gekennzeichnet,**
**dass** innerhalb der Virtual-Reality-Umgebung (12) dem Nutzer eine Bedieneinrichtung (28) darstellbar ist, durch die eine andere Virtual-Reality-Umgebung (30) auswählbar ist, die sich von der dargestellten Virtual-Reality-Umgebung (12) unterscheidet
**dass** in der Gestenerfassungseinrichtung (20) mindestens ein Grenzwert vorgegeben ist, bei dessen Überschreitung ein Warnsignal ausgegeben wird und/oder eine automatische Beendigung der Virtual-Reality-Umgebung (12, 30) erfolgt und
**dass** der mindestens eine Grenzwert einen oder mehrere der folgenden Parameter definiert:
- eine maximal zulässige Geschwindigkeit der Bewegung des Körpers oder eines Körperteils des Nutzers; und/oder
- eine maximal zulässige Beschleunigung der Bewegung des Körpers oder eines Körperteils des Nutzers.

10. System nach Anspruch 9, **dadurch gekennzeichnet, dass** die virtuelle Bedieneinrichtung (28) mehrere Bedienelemente (49) umfasst, durch die mehrere verschiedene Virtual-Reality-Umgebungen (30) zur Auswahl bereitgestellt werden.

11. System nach Anspruch 9 oder 10, **dadurch gekennzeichnet, dass** innerhalb der dargebotenen Virtual-Reality-Umgebung (12) ein virtuelles Bedienelement (50) vorhanden ist, das dem Nutzer jederzeit eine Rückkehr in den realen Raum ermöglicht.

12. System nach einem der Ansprüche 9 bis 11, **gekennzeichnet durch** eine Abschalteinreichtung, die ein oder mehrere der folgenden Ereignisse bewirkt:
- automatisches Abschalten der Virtual-Reality-Umgebung (12, 30) im Fall einer realen Mitteilung an einen oder mehrere Passagiere (14),
- automatisches Abschalten der Virtual-Reality-Umgebung (12, 30) bei einem Notfall,
- manuelles Abschalten der Virtual-Reality-Umgebung (12, 30) eines oder mehrerer Nutzer **durch** das Personal des Land- oder Luftfahrzeugs.

13. System nach einem der Ansprüche 9 bis 12, **dadurch gekennzeichnet, dass** der mindestens eine Grenzwert einen dem Nutzer zur Verfügung stehenden physikalischen Raum definiert.

14. System nach einem der Ansprüche 9 bis 13, **dadurch gekennzeichnet, dass** ein akustischer Grenzwert vorgegeben ist, bei dessen Überschreitung ein Warnsignal an den Nutzer ausgegeben wird und/oder eine automatische Beendigung der Virtual-Reality-Umgebung (12, 30) erfolgt.

15. System nach einem der Ansprüche 9 bis 14, **dadurch gekennzeichnet, dass** die virtuelle Oberfläche der virtuellen Bedieneinrichtung (28) derart angeordnet ist, dass sie für den Nutzer räumlich mit einer physikalischen Oberfläche eines realen Objekts übereinstimmt, insbesondere mit einer Oberfläche eines vor dem Nutzer befindlichen Sitzes (54) oder einer Wand, oder einer Oberfläche des Sitzes (56) des Nutzers.

16. Programmspeicher mit einem Computerprogramm zur Steuerung eines Systems zur Bereitstellung einer Virtual-Reality-Umgebung (12, 30) in einem Land- oder Luftfahrzeug, das Programmschritte zur Durchführung des Verfahrens nach einem der Ansprüche 1 bis 8 umfasst.

## Claims

1. Method and system for the production of a virtual reality environment (12, 30) for passengers (14) of landcraft and aircraft, in which a virtual reality environment (12, 30) is presented to a user by means of a display device (18) and in which an interaction between the user and the virtual reality environment (12, 30) takes place by means of a gesture detection device (20), **characterized in that**
the user is presented a virtual operating device (28) within said virtual reality environment (12) by means of which another virtual reality environment (30) different from the displayed virtual reality environment (12) can be selected,
at least one limit value is predetermined in said gesture recognition device (20), wherein a warning signal is output and/or the virtual reality environment (12, 30) is automatically quit when this limit value is exceeded,and
the at least one limit value defines a maximally allowable speed or acceleration of the movement of the body or of a body part of the user.

2. Method according to claim 1, **characterized in that** the virtual operating device (28) comprises several operating elements (49) by means of which several different virtual reality environments (30) are provided for selection.

3. Method according to claim 1 or 2, **characterized in that** within the displayed virtual reality environment (12, 30) a virtual operating element is provided allowing the user to return any time to the real space.

4. Method according to one of the preceding claims, **characterized in that** the current virtual reality environment (12, 30) is automatically quit and the real-world message is acoustically and/or optically presented to the user in the case of a real-world message to the passengers (14) or in an emergency case.

5. Method according to one of the preceding claims, **characterized in that** the current virtual reality environment (12, 30) can be turned off any time for one or several defined users or for all users by the staff of the landcraft or aircraft.

6. Method according to one of the preceding claims, **characterized in that** a further limit value of said at least one limit value defines a physical space available to the user.

7. Method according to one of the preceding claims, **characterized in that** there is predefined an acoustic limit value, wherein a warning signal is output and/or the virtual reality environment (12, 30) is automatically quit when this acoustic limit value is exceeded.

8. Method according to one of the preceding claims, **characterized in that** for the user, a virtual surface of the virtual operating device (28) spatially matches with a physical surface of a real object, particularly with a surface of a seat (54) in front of the user or a wall or a surface of the user's seat (56).

9. System (10) for producing a virtual reality environment (12, 30) for passengers (14) of landcrafts oder aircrafts, comprising
a display device (18) for presenting a virtual reality environment (12, 30); a gesture detection device (20) for detecting body movements; and
an interaction metaphor unit (22) enabling an interaction of the user with the virtual reality environment (12, 30) from the signals of the gesture detection device (20);
**characterized in that**
the user can be presented a virtual operating device (28) within said virtual reality environment (12) by means of which another virtual reality environment (30) different from the displayed virtual reality environment (12) can be selected,
at least one limit value is predetermined in said gesture detection device (20), wherein a warning signal is output and/or the virtual reality environment (12, 30) is automatically quit when this limit value is exceeded,and
the at least one limit value defines one or several of the following parameters:
- a maximally allowable speed of the movement of the body or of a body part of the user; and/or
- a maximally allowable acceleration of the movement of the body or of a body part of the user.

10. System according to claim 9, **characterized in that** the virtual operating device (28) comprises several operating elements (49) by means of which several different virtual reality environments (30) are provided for selection.

11. System according to claim 9 or 10, **characterized in that** within the displayed virtual reality environment (12, 30) there is provided a virtual operating element allowing the user to return any time to the real space.

12. System according to one of the claims 9 to 11, **characterized by** a shutoff device that causes one or several of the following events:
- an automatic switch-off of the virtual reality environment (12, 30) in the event of a real-world message to one or more passengers (14),
- an automatic switch-off of the virtual reality environment (12, 30) in an emergency case,
- a manual switch-off of the virtual reality environment (12, 30) of one or several users by the staff of the landcraft or aircraft.

13. System according to one of the claims 9 to 12, **characterized in that** the at least one limit value defines a physical space available to the user.

14. System according to one of the claims 9 to 13, **characterized in that** there is predefined an acoustic limit value, wherein a warning signal is output to the user and/or the virtual reality environment (12, 30) is automatically quit when the acoustic limit value is exceeded.

15. System according to one of the claims 9 to 14, **characterized in that** the virtual surface of the virtual operating device (28) is arranged in such a way that for the user said virtual surface spatially matches with a physical surface of a real object, particularly with a surface of a seat (54) in front of the user or a wall or a surface of the user's seat (56).

16. Program memory with a computer program for controlling a system for producing a virtual reality environment (12, 30) in a landcraft or aircraft, the program comprising steps for carrying out the method according to one of the claims 1 to 8.

## Revendications

1. Procédé de préparation d'un environnement de réalité virtuelle (12, 30) pour des passagers (14) de véhicules terrestres et aéronautiques, dans lequel un environnement de réalité virtuelle (12, 30) est présenté à un utilisateur au moyen d'un dispositif à écran d'affichage (18) et une interaction s'effectue entre l'utilisateur et l'environnement de réalité virtuelle (12, 30) par un dispositif de détection de geste (20),
**caractérisé en ce que**
au sein de l'environnement de réalité virtuelle (12), un dispositif de manoeuvre virtuel (28) est proposé à l'utilisateur, permettant de choisir un autre environnement de réalité virtuelle (30) qui diffère de l'environnement de réalité virtuelle (12) illustré,
**en ce qu'**au moins une valeur limite est donnée dans le dispositif de détection de geste (20), lors du dépassement de laquelle un signal d'avertissement est émis et/ou il se produit une terminaison automatique de l'environnement de réalité virtuelle (30), et
ladite au moins une valeur limite définit une vitesse ou une accélération maximale admissible du mouvement du corps ou d'une partie du corps de l'utilisateur.

2. Procédé selon la revendication 1, **caractérisé en ce que** le dispositif de manoeuvre virtuel (28) comprend plusieurs éléments de manoeuvre (49) qui proposent plusieurs environnements de réalité virtuelle (30) différents à choisir.

3. Procédé selon la revendication 1 ou 2, **caractérisé en ce qu'**au sein de l'environnement de réalité virtuelle (12, 30) proposé, il existe un élément de manoeuvre virtuel qui permet à l'utilisateur à tout instant un retour à l'espace réel.

4. Procédé selon l'une des revendications précédentes, **caractérisé en ce qu'**en cas d'un message réel aux passagers (14) ou en cas d'urgence, l'environnement de réalité virtuelle (12, 30) actuel est terminé automatiquement, et le message réel est communiqué par voie acoustique et/ou optique à l'utilisateur.

5. Procédé selon l'une des revendications précédentes, **caractérisé en ce que** l'environnement de réalité virtuelle (12, 30) actuel peut être interrompu à tout instant pour un ou pour plusieurs utilisateurs définis ou pour tous les utilisateurs par le personnel du véhicule terrestre ou aéronautique.

6. Procédé selon l'une des revendications précédentes, **caractérisé en ce qu'**une autre valeur limite de ladite au moins une valeur limite définit un espace physique disponible à l'utilisateur.

7. Procédé selon l'une des revendications précédentes, **caractérisé en ce qu'**une valeur limite acoustique est donnée, lors du dépassement de laquelle un signal d'avertissement est émis et/ou il se produit une terminaison automatique de l'environnement de réalité virtuelle.

8. Procédé selon l'une des revendications précédentes, **caractérisé en ce qu'**une surface virtuelle du dispositif de manoeuvre virtuel (28) pour l'utilisateur coïncide dans l'espace avec une surface physique d'un objet réel, en particulier avec une surface d'un siège (54) situé devant l'utilisateur ou avec une paroi ou avec une surface du siège (56) de l'utilisateur.

9. Système (10) de préparation d'un environnement de réalité virtuelle (12, 30) pour des passagers (14) de véhicules terrestres ou aéronautiques, comportant
un dispositif à écran d'affichage (18) pour représenter un environnement de réalité virtuelle (12, 30) ;
un dispositif de détection de geste (20) pour détecter des mouvements du corps,
et une unité de métaphore d'interaction (22) qui, à partir des signaux du dispositif de détection de geste (20), permet une interaction de l'utilisateur avec l'environnement de réalité virtuelle (12m 30) ;
**caractérisé en ce que**
au sein de l'environnement de réalité virtuelle (12), un dispositif de manoeuvre (28) est proposé à l'utilisateur, permettant de choisir un autre environnement de réalité virtuelle (30) qui diffère de l'environnement de réalité virtuelle (12) illustré,
**en ce qu'**au moins une valeur limite est donnée dans le dispositif de détection de geste (20), lors du dépassement de laquelle un signal d'avertissement est émis et/ou il se produit une terminaison automatique de l'environnement de réalité virtuelle (12, 30), et
**en ce que** ladite au moins une valeur limite définit un ou plusieurs des paramètres suivants :
- une vitesse maximale admissible du mouvement du corps ou d'une partie du corps de l'utilisateur, et/ou
- une accélération maximale admissible du mouvement du corps ou d'une partie du corps de l'utilisateur.

10. Système selon la revendication 9, **caractérisé en ce que** le dispositif de manoeuvre virtuel (28) comprend plusieurs éléments de manoeuvre (49) qui présentent plusieurs environnements de réalité virtuelle (30) différents à choisir.

11. Système selon la revendication 9 ou 10, **caractérisé en ce qu'**au sein de l'environnement de réalité virtuelle (12) proposé, il existe un élément de manoeuvre virtuel (50) qui permet à tout instant à l'utilisateur de retourner dans l'espace réel.

12. Système selon l'une des revendications 9 à 11, **caractérisé par** un dispositif de coupure qui provoque un ou plusieurs des événements suivants :
- la coupure automatique de l'environnement de réalité virtuelle (12, 30) en cas d'un message réel à un ou à plusieurs passagers (14),
- la coupure automatique de l'environnement de réalité virtuelle (12, 30) en cas d'urgence,
- la coupure manuelle de l'environnement de réalité virtuelle (12, 30) d'un ou de plusieurs utilisateurs par le personnel du véhicule terrestre ou aéronautique.

13. Système selon l'une des revendications 9 à 12, **caractérisé en ce que** ladite au moins une valeur limite définit un espace physique disponible à l'utilisateur.

14. Système selon l'une des revendications 9 à 13, **caractérisé en ce qu'**une valeur limite acoustique est donnée, lors du dépassement de laquelle un signal d'avertissement est émis à l'utilisateur et/ou il se produit une terminaison automatique de l'environnement de réalité virtuelle (12, 30).

15. Système selon l'une des revendications 9 à 14, **caractérisé en ce que** la surface virtuelle du dispositif de manoeuvre virtuel (28) est agencée de manière à coïncider dans l'espace avec une surface physique d'un objet réel pour l'utilisateur, en particulier avec une surface d'un siège (54) situé devant l'utilisateur ou avec une paroi ou avec une surface du siège (56) de l'utilisateur.

16. Mémoire informatique comportant un programme informatique pour commander un système de préparation d'un environnement de réalité virtuelle (12, 30) dans un véhicule terrestre ou aéronautique, qui comprend des étapes de programme pour mettre en oeuvre le procédé selon l'une des revendications 1 à 8.
